Europäisches Patentamt

European Patent Office

Office européen des brevets

(11) Veröffentlichungsnummer: **0 282 919**
**B1**

# EUROPÄISCHE PATENTSCHRIFT

(45) Veröffentlichungstag der Patentschrift:
20.06.90

(21) Anmeldenummer: 88103859.0

(22) Anmeldetag: 11.03.88

(51) Int. Cl.⁵: **B60R 13/06, B60J 1/17**

(54) **Scheibeneinfassung.**

(30) Priorität: 19.03.87 DE 3708888

(43) Veröffentlichungstag der Anmeldung:
21.09.88 Patentblatt 88/38

(45) Bekanntmachung des Hinweises auf die Patenterteilung:
20.06.90 Patentblatt 90/25

(84) Benannte Vertragsstaaten:
**DE ES FR GB IT SE**

(56) Entgegenhaltungen:
**EP-A- 0 245 594
FR-A- 2 389 052
FR-A- 2 517 011
FR-A- 2 521 497**

(73) Patentinhaber: **Gebr. Happich GmbH,
Postfach 10 02 49 Clausenbrücke 1,
D-5600 Wuppertal 1(DE)**

(72) Erfinder: **Schröder, Franz, Hagelsiepen 1,
D-5609 Hückeswagen(DE)**
Erfinder: **Buller, Ludger, Mendelssohn Weg 7,
D-5600 Wuppertal 2(DE)**
Erfinder: **Hemmls, Ludger, Grundstrasse 63,
D-5600 Wuppertal 22(DE)**

**Beschreibung**

Die Erfindung bezieht sich auf eine Scheibeneinfassung aus Gummi od. dgl. für beweglich (versenkbare) Scheiben in Fahrzeugen, die einen Fensterausschnitt umschließt und zwei auf Karosserieflansche aufsteckbare, im Querschnitt etwa U-förmig ausgebildete, im montierten Zustand die Scheibe zwischen sich aufnehmende Dichtungsleisten aufweist, die im Bereich der Oberkante und den beiden Seitenkanten des Fensterausschnitts durch eine etwa senkrecht zur Scheibenebene verlaufende Verbindungsbrücke einstückig miteinander verbunden sind, wobei die Verbindungsbrücke im Bereich der Unterkante des Fensterausschnitts von den Dichtungsleisten getrennt ist.

Eine Scheibeneinfassung der gattungsgemäßen Art ist aus der DE-A 3 226 106 bekanntgeworden. Bei dieser bekannten Scheibeneinfassung sind die Dichtungsleisten unverstärkt, d.h. ohne eine darin eingebettete Verstärkungseinlage ausgebildet, wodurch sich nachteiligerweise eine schwierige Verankerung am Fensterausschnitt und die Notwendigkeit ergeben, Verankerungselemente, wie Federklammern od. dgl. vorsehen zu müssen.

Der vorliegenden Erfindung liegt die Aufgabe zugrunde, eine Scheibeneinfassung der eingangs näher erwähnten Art zu schaffen, die im Bereich der Dichtungsleisten verstärkt ist, einfach und problemlos, insbesondere ohne zusätzliche Verankerungselemente montierbar ist, Fertigungstoleranzen auszugleichen vermag und die die technischen Anforderungen ebenso wie die ästhetischen zu erfüllen vermag.

Diese Aufgabe wird erfindungsgemäß dadurch gelöst, daß jede Dichtungsleiste der aus einem Extrusionsprofil bestehenden Scheibeneinfassung durchlaufend mit einer eingelagerten Verstärkungseinlage ausgerüstet ist, daß jede Verstärkungseinlage zug- und stauchfest, jedoch flexibel bzw. biegeelastisch, außenseitig glatt und im Querschnitt etwa U-förmig ausgebildet ist, daß die Dichtungsleisten und die Verbindungsbrücke durch eine an ihren aneinandergesetzten Enden vorgesehene Stoß- Vulkanisationsstelle einen geschlossenen Rahmen bilden und daß die Stoß- Vulkanisationsstelle von der Verstärkungseinlage freigehalten ist, und daß die Verbindungsbrücke im Bereich der Unterkante des Fensterausschnitts von den Dichtungsleisten getrennt ist.

Die erfindungsgemäße Scheibeneinfassung bietet eine Reihe von wesentlichen Vorteilen. Zunächst ergibt sich durch die in den Dichtungsleisten eingebettete Verstärkungseinlage eine einfache Montage und eine zuverlässige Halterung der Scheibeneinfassung an den Karosserieflanschen. Die Maßnahme, die Verstärkungseinlagen glatt auszubilden, hat vorteilhafterweise zur Folge, daß auch die Oberfläche der Scheibeneinfassung eine glatte Ausbildung ohne Einfallstellen, Markierungen od. dgl. aufweist und somit den ästhetischen Anforderungen genügt. Die Bildung eines in sich geschlossenen Rahmens schließt Abdichtungsprobleme aus, wobei die dabei vorgesehene Stoß- Vulkanisationsstelle noch toleranzausgleichend wirkt, weil im Vulkanisationsstellenbereich bewußt keine Verstärkungseinlage angeordnet ist.

Gemäß einer vorteilhaften Ausgestaltung der Erfindung ist vorgesehen, daß der von den Dichtungsleisten getrennte Teil der Verbindungsbrücke z.B. mittig durchgeschnitten ist und daß die dadurch gebildeten Endbereiche der Verbindungsbrücke zusätzliche, in nach unten gerichteter Verlängerung der beiden Seitenkanten des Fensterausschnitts verlaufende Scheibeneinführungen bilden. Der von den Dichtungsleisten getrennte Teil stellt also keinen Abfall sondern ein vorteilhaftes Funktionsteil der erfindungsgemäßen Scheibeneinfassung dar. In diesem Zusammenhang ist eine weitere Ausgestaltung der Erfindung von Vorteil, nach der vorgesehen ist, daß die Dichtungsleisten und die Verbindungsbrücke mit an der Scheibe zur Anlage kommenden Dichtlippen ausgebildet sind.

Gemäß einer Weiterbildung der Erfindung weist die Verbindungsbrücke einen etwa U-förmigen Querschnitt auf und ist mit den Schenkelenden über jeweils einen relativ dünnen, durchlaufenden Verbindungssteg mit den Dichtleisten verbunden. Nach Einschneiden der Verbindungsstege lassen sich diese praktisch als Reißleine für das Abtrennen des entsprechenden Verbindungsbrückenteils verwenden. Ein ungewolltes Weiterreißen kann durch vorgearbeitete Stanzlöcher od. dgl. verhindert werden.

Ein Ausgleich auch größerer Fertigungstoleranzen läßt sich dadurch bewerkstelligen, daß gemäß einem weiteren Merkmal der Erfindung zwischen den Enden der Dichtungsleisten und der Verbindungsbrücke eine relativ (beispielsweise bis zu 30 mm) lange verstärkungseinlagenfreie Vulkanisationsstelle vorgesehen ist, weil die Scheibeneinfassung im Bereich der Vulkanisationsstelle stauch- und dehnfähig ist. Dabei ist die Vulkanisationsstelle in einem vorzugsweise unteren Eckbereich des Scheibeneinfassungsrahmens angeordnet, wodurch sich eine weitgehend verdeckte Plazierung ergibt, insbesondere dann, wenn sich in diesem Eckbereich ein Spiegeldreieck eines Fahrzeugaußenspiegels befindet.

Eine besonders vorteilhafte Weiterbildung der Erfindung wird darin gesehen, daß jede Verstärkungseinlage aus einem U-förmig profilierten Metallstreifen gebildet ist, welcher aus zumindest einem durchlaufenden Steg und einer Vielzahl von quer zur Streifenlängsachse abstandsfrei nebeneinander angeordneten Sprossen besteht. Durch die abstandsfreie Nebeneinanderanordnung der Sprossen werden Einfallstellen in der Scheibeneinfassung vermieden. Zweckmäßigerweise weist jede Verstärkungseinlage einen Steg im Basisschenkel des U-förmig profilierten Metallstreifens und beidseitig am Steg abstandsfrei nebeneinander angeordnete Sprossen auf. Dabei besteht jede Verstärkungseinlage aus einem prägeschnittbearbeiteten, glattgewalzten und U-förmig profilierten Metallstreifen, der zu dem Zweck einwandfreier Verankerung im Gummimaterial eine beidseitge Haftvermittler-Beschichtung aufweist.

Ein Ausführungsbeispiel der Erfindung wird nachfolgend anhand der Zeichnung näher erläutert.

Es zeigen

Fig. 1 eine einen Fensterausschnitt im Türrahmen eines Fahrzeuges umschließende Scheibeneinfassung,

Fig. 2 einen Schnitt durch den Fensterführungsbereich der Scheibeneinfassung, etwa folgend der Linie II-II in Fig. 1,

Fig. 3 einen Schnitt durch den Schachtabdeckungsbereich der Scheibeneinfassung, etwa folgend der Linie III-III in Fig. 1 und

Fig. 4 bis 6 Einzelheiten der Scheibeneinfassung.

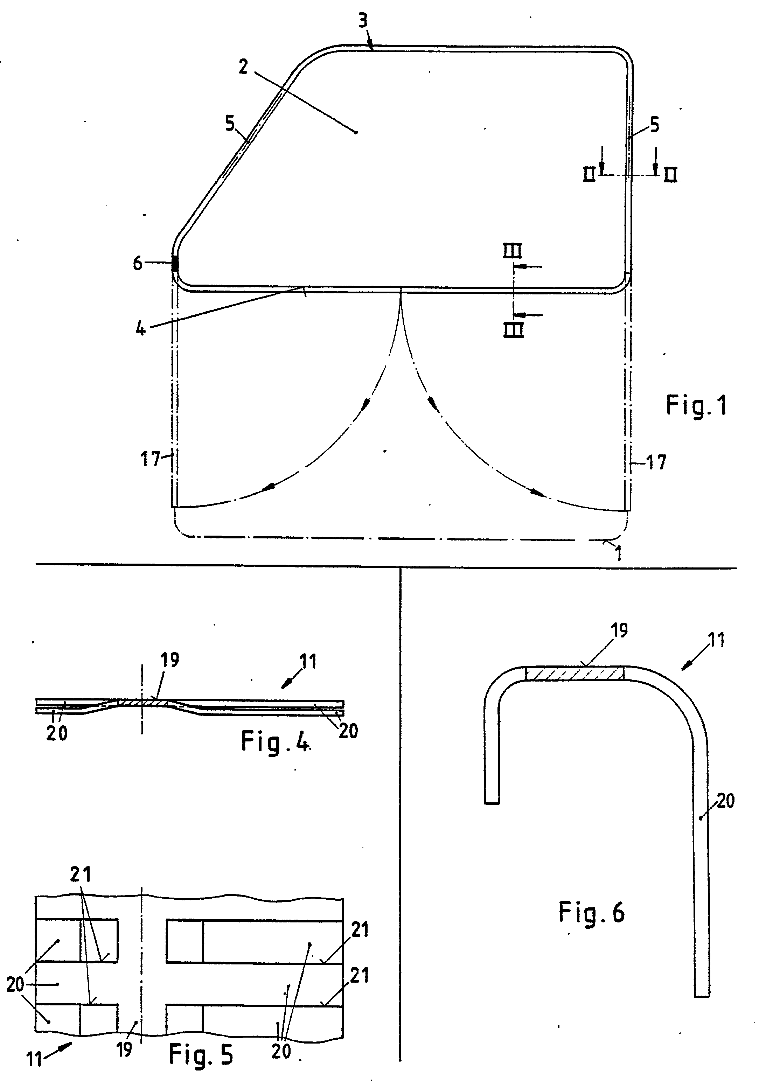

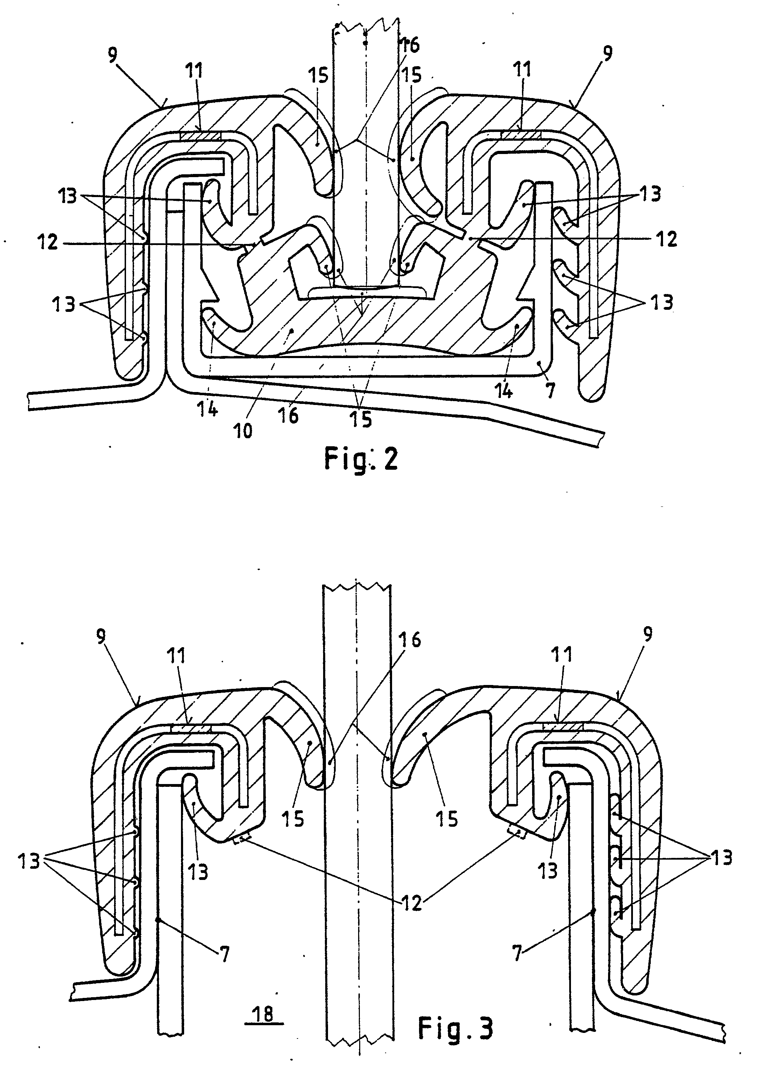

In Fig. 1 ist, mehr schematisch, ein Türrahmen 1 eines Fahrzeugs gezeigt, der eine einen Fensterausschnitt 2 umschließende Scheibeneinfassung aufweist. Der Fensterausschnitt 2 ist durch eine Oberkante 3, eine Unterkante 4 und zwei Seitenkanten 5 umgrenzt. Die Scheibeneinfassung ist als in sich geschlossener Rahmen ausgebildet und weist eine Stoß-Vulkanisationsstelle 6 auf. Im Bereich der Oberkante 3 und der Seitenkanten 5 des Fensterausschnitts 2 ist die Scheibeneinfassung als in Fig. 2 näher dargestelltes Fensterführungsprofil ausgebildet, während die Scheinbeneinfassung im Bereich der Unterkante 4 des Fensterausschnitts aus einer in Fig. 3 näher dargestellten Fensterschachtabdichtung besteht.

Die Querschnittsdarstellung nach Fig. 2 läßt erkennen, daß die hier als Fensterführungsprofil ausgebildete Scheibeneinfassung zwei auf Karosserieflansche 7 aufsteckbare, im Querschnitt etwa U-förmig ausgebildete, im montierten Zustand die strichpunktiert angedeutete Fensterscheibe · 8 zwischen sich aufnehmende Dichtungsleisten 9 aufweist, die durch eine etwa senkrecht zur Scheibenebene verlaufende, sich am Scheibenrand abstützende Verbindungsbrücke 10 einstückig miteinander verbunden sind. Die Dichtungsleisten 9 sind jeweils mit einer eingebetteten, anhand der Fig. 4 bis 6 noch zu beschreibenden Verstärkungseinlage 11 ausgerüstet, die ebenso, wie die Dichtungsleisten 9, einen etwa U-förmigen Querschnitt aufweisen. Auch die Verbindungsbrücke 10 ist im Querschnitt gesehen U-förmig gestaltet und dabei mit den Schenkelenden über jeweils einen relativ dünnen, durchlaufenden Verbindungssteg 12 mit den Dichtungsleisten 9 verbunden.

Jede Dichtungsleiste 9 bildet ein über einer Karosserieflansch 7 steckbares Klammermaul mit sich am Karosserieflansch 7 abstützenden Haltelippen 13. Diese Haltelippen 13 können, wie ein Vergleich der linken zu rechten Zeichnungsseite zeigt, unterschiedlich gestaltet sein. Auch die Verbindungsbrücke 10 ist außenseitig mit angeformten Haltelippen 14 versehen, um die Zuverlässigkeit der Scheibeneinfassungshalterung zu verbessern.

Die Dichtungsleisten 9 und die Verbindungsbrücke 10 weisen an ihren der Fensterscheibe 8 benachbarten Seiten Dichtungslippen 15 auf, die an den Scheibenberührungsflächen besonders gleitfähig gemacht sind, und zwar durch eine Beflockung 15, einer Gleitlackbeschichtung od. dgl.. Eine entsprechende Beflockung 15 od. dgl. ist auch am Scheibenrand zur Anlage kommenden Steg der Verbindungsbrücke 10 vorgesehen.

Während die Scheibeneinfassung im Bereich der Oberkante 3 und den Seitenkanten 5 des Fensterausschnitts 2 die aus Fig. 2 ersichtliche Querschnittsform aufweist, liegt im Bereich der Unterkante 4 des Fensterausschnitts 2 eine andere, nämlich die in Fig. 3 gezeigte Querschnittsform vor, die sich von der nach Fig. 2 jedoch lediglich dadurch unterscheidet, daß hier zwecks Ermöglichung einer Scheibenbewegung die Verbindungsbrücke 10 längs der Verbindungsstege 12 von den Dichtungsleisten 9 getrennt wurde. Es ist aber nur eine bereichsweise Trennung aber nicht ein gänzliches Abtrennen der Verbindungsbrücke 10 dergestalt vorgesehen, daß die Verbindungsbrücke 10 etwa im mittigen Bereich der Unterkante 4 des Fensterausschnitts 2 durchschnitten und dann entlang der Verbindungsstege 12 bis zum Übergangsbereich zu den Seitenkanten 5 des Fensterausschnitts abgezogen (abgeschnitten, gerissen) wird. Es entstehen dann zwei aus dem Scheibeneinfassungsrahmen heraustretende Verbindungsbrückenendbereiche, die in in Verlängerung der Seitenkanten 5 des Fensterausschnitts 2 verlaufende Führungskanäle 17 eingesetzt werden und die zusätzliche Fensterscheiben-Führungen innerhalb des Fensterschachtes 18 bilden. Der Montageablauf hierfür ist in Fig. 1 angedeutet.

Die Stoß- Vulkanisationstelle 6 ist relativ lang und insbesondere verstärkungseinlagenfrei ausgeführt, so daß im Bereich der Vulkanisationsstelle ein Toleranzausgleich vorgenommen werden kann.

Bei der in den Fig. 4 bis 6 dargestellten Verstärkungseinlage 11, handelt es sich um ein prägeschnittbearbeitetes Metallband mit der Besonderheit, daß dieses eine durchgehend glatte Oberfläche aufweist. Das Metallband besitzt einen in Längsrichtung durchlaufenden Steg 19, an dem beidseitig freigeschnittene, senkrecht zum Steg 19 ausgerichtete Sprossen 20 praktisch abstandsfrei sitzen. Die abstandsfreie Anordnung der Sprossen nebeneinander ergibt sich dadurch, daß diese lediglich durch einen Prägeschnitt und nicht durch eine Stanzöffnung voneinander getrennt sind. Bei der Herstellung der Verstärkungseinlage wird demnach ein Metallband im Durchlaufverfahren mit Prägeschnitten 21 versehen, wodurch sich ein durchlaufender Steg 19 mit beidseitig daran sitzenden Sprossen 20 ergibt. In einem nachfolgenden Arbeitsgang wird dann das Metallband gewalzt, um die durch die Prägeschnitte hervorgerufenen Verformungen wieder zu glätten und zu einem U-förmigen Querschnitt rollgeformt. Im dargestellten Ausführungsbeispiel befindet sich der Steg im Basisschenkel der Verstärkungseinlage.

**Patentansprüche**

1. Scheibeneinfassung aus Gummi od. dgl. für bewegliche (versenkbare) Scheiben (8) in Fahrzeugen, die einen Fensterausschnitt (2) umschließt und zwei auf Karosserieflansche (7) aufsteckbare, im Querschnitt etwa U-förmig ausgebildete, im montierten Zustand die Scheibe (8) zwischen sich aufnehmende Dichtungsleisten (9) aufweist, die im Bereich der Oberkante (3) und den beiden Seitenkanten (5) des Fensterausschnitts (2) durch eine etwa senkrecht zur Scheibenebene verlaufende Verbindungsbrücke (10) einstückig miteinander verbunden sind, wobei die Verbindungsbrücke (10) im Bereich der Unterkante (4) des Fensterausschnitts (2) von den Dichtungsleisten (9) getrennt ist, dadurch gekennzeichnet, daß jede Dichtungsleiste (9) der aus einem Extrusionsprofil bestehenden Scheibeneinfassung durchlaufend mit einer eingelagerten Verstärkungseinlage (11) ausgerüstet ist, daß jede Verstärkungseinlage (11) zug- und stauchfest, jedoch flexibel bzw. biegeelastisch, außenseitig glatt und im Querschnitt etwa U-förmig ausgebildet ist, daß die Dichtungsleisten (9) und die Verbindungsbrücke (10) durch eine an ihren aneinandergesetzten Enden vorgesehene Stoß-Vulkanisationsstelle (6) einen geschlossenen Rahmen bilden und daß die Stoß-Vulkanisationsstelle (6) von der Verstärkungseinlage (11) freigehalten ist.

2. Scheibeneinfassung nach Anspruch 1, dadurch gekennzeichnet, daß der von den Dichtungsleisten (9) getrennte Teil der Verbindungsbrücke (10) z.B. mittig durchgeschnitten ist und daß die dadurch gebildeten Endbereiche der Verbindungsbrücke (10) zusätzliche, in nach unten gerichteter Verlängerung der beiden Seitenkanten (5) des Fensterausschnitts (2) verlaufende Scheibenführungen bilden.

3. Scheibeneinfassung nach Anspruch 1 oder 2, dadurch gekennzeichnet, daß die Dichtungsleisten (9) und die Verbindungsbrücke (10) mit an der Scheibe (8) zu Anlage kommenden Dichtlippen (15) ausgebildet sind.

4. Scheibeneinfassung nach einem oder mehreren der Ansprüche 1 bis 3, dadurch gekennzeichnet, daß die Verbindungsbrücke (10) einen etwa U-förmigen Querschnitt aufweist und mit den Schenkelenden über jeweils einen relativ dünnen, durchlaufenden Verbindungssteg (12) mit den Dichtungsleisten (9) verbunden ist.

5. Scheibeneinfassung nach einem oder mehreren der Ansprüche 1 bis 4, dadurch gekennzeichnet, daß zwischen den Enden der Dichtungsleisten (9) und der Verbindungsbrücke (10) eine relativ (beispielsweise bis zu 30 mm) lange verstärkungseinlagenfreie Vulkanisationsstelle (6) vorgesehen ist.

6. Scheibeneinfassung nach einem oder mehreren der Ansprüche 1 bis 5, dadurch gekennzeichnet, daß die Vulkanisationsstelle (6) in einem, vorzugsweise unteren Eckbereich des Scheibeneinfassungsrahmens angeordnet ist.

7. Scheibeneinfassung nach einem oder mehreren der Ansprüche 1 bis 6, dadurch gekennzeichnet, daß jede Verstärkungseinlage (11) aus einem U-förmig profilierten Metallstreifen gebildet ist, welcher aus zumindest einem durchlaufenden Steg (19) und einer Vielzahl von quer zur Streifenlängsachse abstandsfrei nebeneinander angeordneten Sprossen (20) besteht.

8. Scheibeneinfassung nach einem oder mehreren der Ansprüche 1 bis 7, dadurch gekennzeichnet, daß jede Verstärkungseinlage (11) einen Steg (19) im Basisschenkel des U-förmig profilierten Metallstreifens und beidseitig am Steg (19) abstandsfrei nebeneinander angeordnete Sprossen (20) aufweist.

9. Scheibeneinfassung nach einem oder mehreren der Ansprüche 1 bis 8, dadurch gekennzeichnet, daß jede Verstärkungseinlage (11) aus einem prägeschnittbearbeiteten, glattgewalzten und U-förmig profilierten Metallstreifen besteht.

10. Scheibeneinfassung nach einem oder mehreren der Ansprüche 1 bis 9, dadurch gekennzeichnet, daß die Verstärkungseinlagen (11) eine beidseitige Haftvermittler-Beschichtung aufweisen.

**Revendications**

1. Entourage de vitre en caoutchouc ou l'analogue pour une vitre (8) mobile (pouvant être baissée) dans un véhicule, qui entoure une ouverture de fenêtre (2) et comporte deux bandes d'étanchéité (9) pouvant être enfichées sur les ailes d'un profilé de la carrosserie (7) de section transversale en U et, une fois montées, recevant entre elles la vitre (8), lesquelles bandes sont reliées ensemble de façon à former une seule pièce, dans la zone de l'arête supérieure (3) et des deux arêtes latérales (5) de l'ouverture de fenêtre (2), par un pont de liaison (10) s'étendant sensiblement perpendicualirement au plan de la vitre, le pont de liaison (10) étant séparé des bandes d'étanchéité (9) dans la zone de l'arête inférieure (4) de l'ouverture de fenêtre (2), caractérisé en ce que chaque bande d'étanchéité (9) de l'entourage de vitre constitué par un profilé extrudé est équipée de façon continue d'une garniture de renforcement (11) est résistante en traction et en refoulement mais toutefois est flexible ou élastique en flexion est lisse sur le côté extérieur, et elle a une section transversale en U, en ce que les bandes d'étanchéité (9) et le pont de liaison (10) forment, grâce à une jonction vulcanisée (6) de leurs extrémités en vis-à-vis un cadre fermé, et en que cette jonction vulcanisée (6) est dépouvue de garniture de renforcement (11).

2. Enrourage de vitre selon la revendication 1, caractérisé en ce que la partie du pont de liaison (10) séparée des bandes d'étanchéité (9) est coupée par exemple au milieu, et en ce que les portions terminales du pont de liaison (10) ainsi formés constituent des guidages de vitre supplémentaires s'étendant dans le prolongement, orienté vers le bas, des deux arêtes latérales (5) de l'ouverture de fenêtre (2).

3. Entourage de fenêtre selon la revendication 1 ou 2, caractérisé en ce que les bandes d'étanchéité (9) et le pont de liaison (10) sont réalisés avec des lèvres d'étanchéité venant au contact de la vitre (8).

4. Entourage de vitre selon l'une ou plusieurs des revendications 1 à 3, caractérisé en ce que le pont de liaison (10) a une section transversale en U et est relié aux bandes d'étanchéité (9) par les extrémités de ses ailes par l'intermédiaire d'une nervure de liaison (12) continue, relativement mince.

5. Entourage de vitre selon l'une ou plusieurs des revendications 1 à 4, caractérisé en ce qu'on prévoit entre les extrémités des bandes d'étanchéité (9) et du pont de liaison (10) une jonction vulcanisée (6) relativement longue (par exemple jusqu'à 30 mm) dépourvue de garniture de renforcement.

6. Entourage de vitre selon l'une ou plusieurs des revendications 1 à 5, caractérisé en ce que la jonction vulcanisée (6) est placée dans une zone d'angle du cadre de l'entourage de la vitre, de préférence dans une zone inférieure.

7. Entourage de vitre selon l'une ou plusieurs des revendications 1 à 6, caractérisé en ce que chaque garniture de renforcement (11) est formée par une bande métallique profilée en U, laquelle est constituée par a moins une baguette continue (19) et une multiplicité d'échelons (20) disposés l'un à côté de l'autre sans intervalles, transversalement à l'axe longitudinal de la bande.

8. Entourage de vitre selon l'une ou plusieurs des revendications 1 à 7, caractérisé en ce que chaque garniture de renforcement (11) comporte une baguette (19) dans l'aile de base de la bande métallique profilée en U et des échelons (20) disposés sur la baguette (19) l'un a côté de l'autre sans intervalles.

9. Entourage de vitre selon l'une ou plusieurs des revendications 1 à 8, caractérisé en ce que chaque garniture de renforcement (11) est constituée par une bande métallique estampée, laminée et profilée en U.

10. Entourage de vitre selon l'une ou plusieurs des revendications 1 à 9, caractérisé en ce que les garnitures de renforcement (11) comportent de chaque côté un revêtement adhésif.

**Claims**

1. A window glass sealing of rubber or the like for movable (lowerable) panes (8) in vehicles, which surrounds a window aperture (2) and comprises two sealing strips (9) fittable on body flanges (7), made somewhat U-shaped in cross-section and receiving the pane (8) between them in the fitted condition, which strips are connected in one piece with one another in the region of the upper edge (3) and the two side edges (5) of the window aperture (2) by a connecting bridge (10) extending approximately perpendicular to the plane of the pane, the connecting bridge (10) being separated from the sealing strips (9) in the region of the lower edge (4) of the window aperture (2), characterised in that each sealing strip (9) of the window glass sealing in the form of an extruded section is continuously provided with an incorporated reinforcing inlay (11), in that each reinforcing inlay (11) is made firm to traction and upsetting, but flexible or elastic to bending, externally smooth and somewhat U-shaped in cross-section, in that the sealing strips (9) and the connecting bridge (10) form a closed frame, due to a vulcanised abutment (6) provided on their ends which oppose one another, and in that the vulcanised abutment (6) is kept free from the reinforcing insert (11).

2. A window glass sealing according to Claim 1, characterised in that the part of the connecting bridge (10) separated from the sealing strips (9) is cut through, for example centrally, and in that the end zones of the connecting bridge (10) thus formed form additional pane guides extending as downwardly-directed prolongations of the two side edges (5) of the window aperture (2).

3. A window glass sealing according to Claim 1 or 2, characterised in that the sealing strips (9) and the connecting bridge (10) are formed with sealing lips (15) adapted to abut on the pane (8).

4. A window glass sealing according to any one or more of Claims 1 to 3, characterised in that the connecting bridge (10) has an approximately U-shaped cross-section and is connected by the leg ends with the sealing strips (9) through a relatively thin, continuously extending connecting web (12) in each case.

5. A window glass sealing according to any one or more of Claims 1 to 4, characterised in that, between the ends of the sealing strips (9) and the connecting bridge (10), there is provided a vulcanised joint (6) which is relatively long (for example up to 30 mm.) and free from a reinforcing inlay.

6. A window glass sealing according to any one or more of Claims 1 to 5, characterised in that the vulcanised joint (6) is arranged in a preferably lower corner region of the window glass sealing frame.

7. A window glass sealing according to any one or more of Claims 1 to 6, characterised in that each reinforcing inlay (11) is formed from a metal strip, profiled in U-form, which comprises at least one continuous web (19) and a plurality of cross-bars (20) arranged side by side without spacing transversely of the longitudinal axis of the strip.

8. A window glass sealing according to any one or more of Claims 1 to 7, characterised in that each reinforcing inlay (11) comprises a web (19) in the base leg of the metal strip of U-shaped profile and cross-bars (20) arranged without spacing side by side on both sides on the web (19).

9. A window glass sealing according to any one or more of Claims 1 to 8, characterised in that each reinforcing inlay (11) is formed of a metal strip which is machined by swage-cutting, smooth-rolled and profiled in U-form.

10. A window class sealing according to any one or more of Claims 1 to 9, characterised in that the reinforcing inlays (11) have an adhesion-communicating coating acting on both sides.

EP 0 282 919 B1

Fig.1

Fig.4

Fig.5

Fig. 6

EP 0 282 919 B1

Fig. 2

Fig. 3